# EUROPÄISCHE PATENTSCHRIFT

(11) **EP 0 823 930 B1**
(45) Veröffentlichungstag und Bekanntmachung des Hinweises auf die Patenterteilung: **16.06.2004**
(21) Anmeldenummer: 96914998.8
(22) Anmeldetag: 26.04.1996
(51) Int. Cl.: C09D 11/02

(54) **AROMATENFREIE LÖSUNGSMITTEL FÜR DRUCKFARBEN**
AROMATIC COMPOUND-FREE SOLVENT FOR PRINTING INKS
SOLVANT EXEMPT DE COMPOSES AROMATIQUES POUR ENCRES D'IMPRIMERIE

(30) Priorität: 04.05.1995 DE 19516028
(43) Veröffentlichungstag der Anmeldung: 18.02.1998
(73) Patentinhaber: Cognis Deutschland GmbH & Co. KG, 40589 Düsseldorf (DE)
(72) Erfinder: FEUSTEL, Dieter, D-40789 Monheim (DE); FIES, Matthias, D-47800 Krefeld (DE)
(86) Internationale Anmeldenummer: PCT/EP1996/001770
(87) Internationale Veröffentlichungsnummer: WO 1996/034920

(56) Entgegenhaltungen:
- WO-A-95/05424
- US-A- 5 178 672
- WORLD SURFACE COATINGS ABSTRACTS, Bd. 63, Nr. 581, November 1990, HEAD. HILL HALL, GB, Seite 2065 XP000109677

## Beschreibung

### Gebiet der Erfindung

Die Erfindung betrifft die Verwendung von Fettsäurederivaten als Ersatz für aromatische Lösungsmittelbestandteile in Lösungsmitteln für Druckfarben. Weiterhin betrifft die Erfindung Druckfarben, die Bindemittel, Pigmente, aromatenfreie Lösungsmittel sowie gegebenenfalls Additive enthalten.

### Stand der Technik

Um die unterschiedlichsten Arten von Druckerzeugnissen herzustellen, bedient man sich verschiedener Druckteckniken die sich in drei Hauptdruckarten einteilen lassen: den Hochdruck, den Flachdruck (oder auch Offsetdruck) sowie den Tiefdruck.
Beim Hochdruck erfolgt die Übertragung der Druckfarbe von harten, erhabenen Lettern, die durch Gummiwalzen mit einer dünnen Farbschicht bedeckt werden, auf das Substrat. Die Druckfarbe muß so beschaffen sein, daß sie relativ langsam trocknet und nicht vorzeitig auszuhärten beginnt. Für moderne, schnellaufende Zeitungsdruckmaschinen im rotations-Hochdruckverfahren werden viskose, sehr langsam trocknende Druckfarben benötigt.
Beim Offsetdruck wird die abzubildende Gestalt in Form von Zonen gegensäzlicher Polarität auf Druckplatten fixiert. Die hydrophobe, viskose Druckfarbe benetzt nur die ebenfalls hydrophoben Bereiche auf den Druckplatten.

Beim Tiefdruckprozess wird das Motiv in die Druckplatte eingraviert. Nach dem Benetzen der Druckplatte mit der relativ dünnflüssigen Druckfarbe wird die Oberfläche abgestreift und es verbleibt nur noch Druckfarbe in den eingravierten Vertiefungen, von denen sie dann auf das zu bedruckende Substrat übertragen wird.

Die vorangegangenen Beispiele zeigen, daß Druckfarben vor dem Hintergrund der Wirtschaftlichkeit eine Vielzahl an Anforderungen erfüllen müssen. Die Hauptbestandteile einer Druckfarbe sind Pigmente, Bindemittel, Lösungsmittel und Additive, mit denen die gewünschten Eigenschaften der Druckfarben verändert werden. Je nach Einsatz der Druckfarbe können so beispielsweise die Viskosität, das Fließverhalten und die Klebrigkeit eingestellt werden. Die unterschiedlichen Anforderungen an die physikalischen Eigenschaften vor dem Hintergrund der Wirtschaftlichkeit, insbesondere bei den Massendruckerzeugnissen stellen an das in der Druckfarbe verwendete Lösungsmittel hohe Anforderungen. Einerseits muß es in der Lage sein, die unterschiedlichsten Bindemittel sowie verschiedene Zusatze zu lösen, andererseits soll es eine Einstellung der Viskosität im gewünschten Bereich erlauben.

Aufgrund ihres günstigen Preises haben sich die Mineralöle als Lösungsmittel im Druckfarbenbereich durchsetzen können. Ein Nachteil dieser auf Kohlenwasserstoffen basierenden Verdünner liegt jedoch in der Tatsache, daß ihre Lösungseigenschaften in Bezug auf die eingesetzten Bindemittel schlecht sind. So stellt man beispielsweise bei Mineralöl mit abnehmendem Aromatengehalt eine Verschlechterung der Lösungseigenschaften für Bindemittel fest (*Ullmann's Encyclopedia of Industrial Chemistry*, **A 22**, 147 (1993)). In der Praxis kommen daher in Druckfarben Lösungsmittel mit z.T. hohem Gehalt an aromatischen Kohlenwasserstoffen zum Einsatz, um die schlechten Lösungseigenschaften der aliphatischen Kohlenwasserstoffe im Mineralöl zu kompensieren. Beim Offsetdruck beispielsweise werden naturharzmodifizierte Phenolharze und mit trocknenden Ölen modifizierte Alkydharze in hochsiedenden Mineralölen gelöst, die 16 bis 20 % Aromaten enthalten (G. H. Hutchinson in "Solvent Problems in Industry", G. Kakabadse (ed.), Elsevier, New York (1984)). Die aromatischen Bestandteile im Lösungsmittel wirken sich jedoch ungünstig auf die Toxikologie sowie auf das Umweltverhalten des Lösungsmittels aus.

Ziel der vorliegenden Erfindung ist es aus den genannten Gründen, die aromatischen Bestandteile in zur Herstellung von Druckfarben benutzten Lösungsmittelgemischen durch in der Wirksamkeit mindestens gleich gute, in der Umweltverträglichkeit jedoch klar überlegene Stoffe zu substituieren.

Überraschend wurde jetzt gefunden, daß sich durch Fettsäureester und Fettalkohole die aromatischen Bestandteile in Lösungsmitteln für Druckfarben in den unterschiedlichsten Einsatzbereichen völlig ersetzen lassen.

Der Einsatz von Fettsäureestern in Druckfarben ist seit langem bekannt. So werden insbesondere die Triglyceride ungesättigter Fettsäuren für Druckfarben im Lithographieprozess benutzt. Die am häufigsten eingesetzten Öle sind Leinsamen-, Soja- und Tallöl (*Encyclopedia of Chemical Technology,* **13**, 381 ff). Der Zweck dieser Zusätze liegt jedoch in ihrer Funkion als oxidativ trocknendes Bindemittel. Eine Verwendung von Estern ungesättigter Fettsäuren als Lösungsmittel bei der Druckfarbenherstellung geht aus den einschlägigen Werken nicht hervor.

Die Druckschrift DE-A 43 19 825 lehrt den Gebrauch einer Reinigungspaste zum Entfernen von Rückständen und Druckfarben von Gummi-Druckwalzen oder Drucktüchern. Neben abrasiven Bestandteilen enthält die Reinigungspaste 10 bis 25 % Fettsäureester, und zwar als Methyl- und Ethylester. Insbesondere der Sojaund der Rapsölsäuremethylester werden ausdrücklich erwähnt. Aus der Druckschrift läßt sich jedoch nicht entnehmen, daß die Fettsäureester auch zum Herstellen einer Druckfarbe geeignet sind, und nicht nur in Verbindung mit abrasiven Stoffen zum Reinigen von Farbwalzen.

Ebenfalls mit der Reinigung von Druckwalzen, -tüchern und -maschinen beschäftigt sich die Druckschrift US 5,340,493. Hier werden Reinigungslösungen bestehend aus Tallöl-alkylester, organischem Lösungsmittel und einem Tensid offenbart. Ziel der Erfindung war eine Reinigungslösung für Druckmaschinenbestandteile, die Verwendung derselben bei der Herstellung von Druckfarben ist an keiner Stelle nahegelegt.

In der Druckschrift DE-C3-25 12 734 wird einer Tinte ein gesättigter Fettsäureester als Trennmittel zugegeben. Ziel ist hier ein verbessertes Abwischverhalten beim Tintenauftrag auf nichtsaugende Oberflächen. Die Tinte enthält jedoch kein Mineralöl.

Es ist aus den Druckschriften US 3,946,138 sowie der dazugehörigen US 4,069,179 bekannt, daß für den Transferdruck benutzte Drucktinten als Träger einen aliphatischen Monoalkohol enthalten können. Hierzu werden beispielsweise Cetylalkohol, Myristylalkohol und Stearylalkohol genannt. Aus der Beschreibung sowie aus den Beispielen geht hervor, daß die eingesetzte Alkoholmenge mindestens 40 Gew. % der Tinte ausmacht. Mineralöle werden nicht erwähnt.

### Beschreibung der Erfindung

Gegenstand der Erfindung ist die Verwendung eines Lösungsmittelgemischs zur Herstellung von Druckfarben, dadurch gekennzeichnet, daß das Lösungsmittelgemisch
a) 80 bis 99 Gew. % eines aromatenfreien Mineralöls, sowie
b) 1 bis 20 Gew. % Fettsäureester von C₈ bis C₂₂-Fettsäuren mit insgesamt bis zu 60 C-Atomen
   und / oder
c) 1 bis 20 Gew. % Fettalkohole mit 6 bis 36 C-Atomen
enthält.

Hierbei ist dem Fachmann sofort ersichtlich, daß sich der maximale Anteil an aromatenfreiem Mineralöl im Lösungsmittelgemisch beim gleichzeitigen Einsatz zusammen mit Fettsäureestern und Fettalkoholen auf maximal 98 Gew.% verringert.

Die Mineralöle werden in dem zur Herstellung der Druckfarbe benutzten Lösungsmittelgemisch in einem Gewichtsanteil von nicht weniger als 80 Gew. %, jedoch auch nicht mehr als 99 Gew % eingesetzt. Dabei ist auf das jeweilige Lösungsverhalten des verwendeten Bindemittels zu achten.

Das verwendete Mineralöl sollte in einem Bereich von 100 bis 350°C sieden. Bevorzugt werden erfindungsgemäß solche Mineralöle eingesetzt, deren Siedebereich zwischen 240 und 330 °C liegt, wobei diejenigen besonders bevorzugt werden, deren Siedebereich zwischen 270 und 310°C liegt.

Zusätzlich zum beschriebenen Mineralöl können Fettsäureester eingesetzt werden, um die Löslichkeit des Bindemittels zu verbessern. Die Fettsäureester werden dabei in einem Bereich von 1 bis 20 Gew. % bezogen auf den gesamten Lösungsmittelgehalt eingesetzt.

Im Sinne der Erfindung können beispielsweise die Ester der Dodecensäure, Decensäure, Octensäure, Octadiensäure, Dodecadiensäure, Decadiensäure, Ölsäure, Erucasäure, Ricinolsäure, Tallölfettsäure, Linolsäure, Stearinsäure, Palmitinsäure, Heptadecansäure, Nonadecansäure, Isopalmitinsäure, Ölsäure, Caprylsäure, Caprinsäure, Laurinsäure, Myristinsäure, Arachinsäure, Linolensäure und Behensäure eingesetzt werden, wobei diese Aufzählung beispielhaften und nicht limitierenden Charakter haben soll.

Besonders bevorzugt ist der Einsatz solcher Fettsäureester, deren Fettsäurereste natürlichen Ursprungs sind.

Die erfindungsgemäß eingesetzten Fettsäureester können gesättigt sein. Es werden jedoch ganz besonders bevorzugt solche eingesetzt, die im Fettsäurerest mindestens eine Doppelbindung enthalten.

Erfindungsgemäß einsetzbar sind ebenfalls solche Fettsäureester, die durch Umesterung natürlich vorkommender Triglyceride wie z.B. Rindertalg, Palmöl, Erdnußöl, Rüböl, Baumwollsaatöl, Sojaöl, Sonnenblumenöl und Leinöl mit entsprechenden Alkoholen erhältlich sind und somit ein Gemisch von Estern unterschiedlicher natürlicher Fettsäuren in wechselnder Zusammensetzung darstellen. Hierbei sind erfindungsgemäß solche Triglyceride bevorzugt, die einen hohen Gehalt an ungesättigten Fettsäuren aufweisen. Hierzu zählen beispielsweise Sesamöl, Rüböl, Leinöl, Maisöl, Getreidekeimöl, Sojabohnenöl, Mohnöl, Sonnenblumenöl und Perillaöl.

Im Sinne der Erfindung können auch solche gesättigten oder ungesättigten Fettsäureester zum Einsatz kommen, die aus der Veresterung von Derivaten naturlich vorkommender Fettsäuren erhältlich sind. So sind beispielsweise die Ester der Ricinensäure, der Elaidinsäure oder der Pelargonsäure erfindungsgemäß brauchbar.

Als Alkoholkomponente im Fettsäureester geeignet sind alle mono-, di-, und trifunktionellen Alkohole. Hierzu zählen insbesondere die monofunktionellen geradkettigen und verzweigten Alkanole wie z.B. Methanol, Ethanol, Propanol, isoPropanol, Butanol, iso-Butanol, tert-Butanol, Pentanol, Hexanol sowie die höheren Homologen. Doch auch ungesättigte Alkohole wie Allylalkohol, Butenylalkohol, Pentenylalkohol sowie die höheren Homologen bis zu den Fettalkoholen wie z.B. dem Oleylalkohol und dem Erucaalkohol sowie auch die aus der Reduktion von Dimerfettsäuren erhältlichen Diole können erfindungsgemäß eingesetzt werden. Bevorzugt ist allerdings der Einsatz von mit monofunktionellen Alkoholen veresterten Fettsäuren, bei denen die Alkoholkomponente 1 bis 6 C-Atome und insbesondere bevorzugt 1 - 4 C-Atome aufweist.

Neben den, oder anstatt der Fettsäureester können zur erfindungsgemäßen Lösung der Aufgabe auch Fettalkohole mit 6 bis 36 C-Atomen eingesetzt werden. Ebenso wie die Fettsäureester werden sie anteilig in Mengen zwischen 1 und 20 Gew. % dem Mineralöl zugegeben.

Einsetzbar im Sinne der Erfindung sind beispielsweise Dodecanol, Decanol, Octanol, Octenol, Dodecenol, Decenol, Octadienol, Dodecadienol, Decadienol, Oleylalkohol, Erucaalkohol, Ricinolalkohol, Stearylalkohol, Palmitylalkohol, Laurylalkohol, Myristylalkohol, Arachidylalkohol, Caprylalkohol, Caprinalkohol, Linoleylalkohol, Linolenylalkohol und Behenylalkohol, wobei diese Aufzählung beispielhaften und nicht limitierenden Charakter haben soll.

Der Darstellungsweg des Fettalkohols spielt für den erfindungsgemäßen Einsatz keine Rolle. Die Fettalkohole stammen jedoch bevorzugt von Fettsäuren ab, wobei üblicherweise von einer Gewinnung aus den Estern der Fettsäuren durch Reduktion ausgegangen werden kann.

Besonders bevorzugt ist der Einsatz solcher Fettalkohole, die aus der Veresterung und Reduktion natürlich vorkommender Fettsäuren erhältlich sind.

Die erfindungsgemäß benutzten Fettalkohole können gesättigt sein. Es werden jedoch bevorzugt solche eingesetzt, die mindestens eine Doppelbindung aufweisen.

Erfindungsgemäß einsetzbar sind ebenfalls solche Fettalkohole, die durch Reduktion naturlich vorkommender Triglyceride wie Rindertalg, Palmöl, Erdnußöl, Rüböl, Baumwollsaatöl, Sojaöl, Sonnenblumenöl und Leinöl oder aus deren Umesterungsprodukten mit entsprechenden Alkoholen entstehenden Fettsäureestem erzeugt werden, und somit ein Gemisch von unterschiedlichen Fettalkoholen darstellen.

Im Sinne der Erfindung können auch solche gesättigten oder ungesättigten Fettalkohole zum Einsatz kommen, die aus der Veresterung und Reduktion von Derivaten natürlich vorkommender Fettsäuren erhältlich sind. So sind beispielsweise der Ricinenalkohol, der Elaidylalkohol oder der Pelargonalkohol erfindungsgemäß brauchbar.

Es ist kennzeichnend für die vorliegende Erfindung, daß die Fettsäureester sowie die Fettalkohole im Gemisch mit aromatenfreiem Mineralöl entweder einzeln oder im Gemisch zum Einsatz kommen, daß aber eine der beiden Komponenten vorhanden sein muß.

In einer bevorzugten Ausführungsform der Erfindung werden die Komponenten des Lösungsmittelgemisches so gewählt, daß das Lösungsmittelgemisch bei 20°C flüssig ist.

Ein weiterer Gegenstand der Erfindung sind Druckfarben, die Bindemittel, Pigmente und ein Lösungsmittelgemisch enthalten, das
a) 80 - 99 Gew. % eines aromatenfreien Mineralöls
   sowie
b) 1 bis 20 Gew. % Fettsäureester von C₈ bis C₂₂ Fettsäuren mit insgesamt bis zu 60 C-Atomen
   und /oder
c) 1 bis 20 Gew.% Fettalkohole mit 6 bis 36 C-Atomen
enthält.
Sie können gegebenenfalls weitere Inhaltsstoffe wie Tenside, Füllstoffe, Stabilisatoren, Sikkative und Rheologieverbesserer enthalten.

Hierbei können als Bindemittel die an sich bekannten Harze wie beispielweise Schellack, Kolophonium, Phenol-modifiziertes Kolophonium, Polyamide, Phenolharze, Polyurethane, Polyepoxide, Cellulose, Nitrocellulose sowie bevorzugt Alkydharze benutzt werden.

Mit den erfindungsgemäßen Lösungsmittelgemisch können unter Zugabe der üblichen Komponenten Offset-, Transfer-, Flach-, Hoch-, und/oder Tiefdruckfarben hergestellt werden.

### Beispiele

Alle prozentualen Angaben verstehen sich, sofern nicht anders vermerkt, als Gewichtsprozent.

### Beispiel 1: Herstellung einer Tiefdruckfarbe

100 Teile einer Pigmentbase (Hacolor P.Y. 13)) zusammen mit 100 Teilen eines handelsüblichen, trocknenden Alkydharzes auf Basis Sojaöl (Isophthalsäure, Trimethylolpropan, 1500 dPa • s, 20°C), 10 Teilen Cobalt-Octoat mit einem Cobalt Anteil von 6 %, 20 Teilen eines mikronisierten Polyethylenwachses, 320 Teilen eines Phenol-modifizierten Kolophoniumharzes, 400 Teilen eines aromatenfreien Mineralöls und 40 Teilen eines Leinölfettsäurepropylesters werden auf einem Dreiwalzenstuhl angerieben.

### Vergleichbeispiel

In der oben angegebenen Zusammensetzung wurden anstatt 400 Teilen aromatenfreien Mineralöls und 40 Teilen Leinölfettsäurepropylesters 440 Teile eines Mineralöls mit einem Aromatengehalt von 18 % (Siedebereich 270 - 310°C, Anilinpunkt 72 °C) verwendet.

Die Farben wurden einem drucktechnischen Vergleich unterzogen. Die aufgetragene Druckfarbenschicht betrug in allen Fällen 1,5 g m² ± 5 %.

### Beispiel 2: Herstellung einer Offsetdruckfarbe

100 Teile Furnace-Ruß wurden zusammen mit 10 Teilen eines mikronisierten Polyethylenwachses, 35 Teilen eines handelsüblichen, trocknenden Alkydharzes auf Basis Sojaöl (Isophthalsäure, Trimethylolpropan, 1500 dPa • s, 20°C), 2 Teilen Cobalt-Octoat mit einem Cobalt Anteil von 6 %, 65 Teilen eines Phenol-modifizierten Kolophoniumharzes, 50 Teilen Gilsonite Asphalt, 200 Teilen eines aromatenfreien Mineralöls, 10 Teilen Octadecenol und 30 Teilen Rapsfettsäurepropylester bei 200 °C zusammengeschmolzen und auf einem Dreiwalzenstuhl angerieben.

### Vergleichsbeispiel:

In der oben angegebenen Zusammensetzung wurden anstatt 200 Teilen aromatenfreien Mineralöls, 30 Teilen Rapsfettsäurepropylesters und 10 Teilen Octadecenols 240 Teile eines Mineralöls mit einem Aromatengehalt von 18 % (Siedebereich 270 - 310°C, Anilinpunkt 72 °C)verwendet. Die Komponenten wurden bei 200°C zusammengeschmolzen und auf einem Dreiwalzenstuhl angerieben.

Die Farben wurden im Rotationsdruck auf Zeitungspapier (52 g/m²) gedruckt und einem drucktechnischen Vergleich unterzogen. Die aufgetragene Druckfarbenschicht betrug in allen Fällen 1,5 g m² ± 5 %.

### Beispiel 3: Herstellung einer Transferdruckfarbe

150 Teile Dispers-Red 60 zusammen mit 50 Teilen Dispers-Blue 331, 200 Teile eines trocknenden Alkydharzes auf Basis von Leinöl-Isophthalsäure, 10 Teile Cobalt-Octoat, 250 Teile eines Phenol-modifizierten Kolophoniumharzes, 300 Teile eines aromatenfreien Mineralöls, 25 Teile Octadecenol und 25 Teile Ölsäurepropylester werden auf einem Dreiwalzenstuhl angerieben.

### Vergleichsbeispiel:

Anstatt 300 Teilen eines aromatenfreien Mineralöls, 25 Teilen Octadecenol und 25 Teilen Ölsäurepropylester wurden zu den obigen Komponenten als Lösungsmittel 350 Teile eines Mineralöls mit einem Aromatengehalt von 18 % und einem Anilinpunkt von 72 °C (Siedebereich von 270 - 310 °C) gegeben. Die resultierende Transferdruckfarbe wurde mit einer Schichtdicke von 1,5 g/m² angedruckt sowie unmittelbar nach dem Druck umgebügelt und einem drucktechnischen Vergleich unterzogen.
Die aufgetragene Druckfarbenschicht betrug in allen Fällen 1,5 g m² ± 5 %.

## Patentansprüche

1. Verwendung eines Lösungsmittelgemischs zur Herstellung von Druckfarben, **dadurch gekennzeichnet, daß** das Lösungsmittelgemisch
a) 80 bis 99 Gew. % eines aromatenfreien Mineralöls,
sowie
b) 1 bis 20 Gew. % Fettsäureester von C₈ bis C₂₂-Fettsäuren mit insgesamt bis zu 60 C-Atomen
und/oder
c) 1 bis 20 Gew. % Fettalkohole mit 6 bis 36 C-Atomen
enthält.

2. Verwendung nach Anspruch 1, **dadurch gekennzeichnet, daß** die Fettsäurereste der im Lösungsmittelgemisch enthaltenen Fettsäureester natürlichen Ursprungs sind.

3. Verwendung nach den Ansprüchen 1 oder 2, **dadurch gekennzeichnet, daß** die Fettsäureester im Fettsäurerest mindestens eine C=C-Doppelbindung aufweisen.

4. Verwendung nach Anspruch 1, **dadurch gekennzeichnet, daß** die Fettalkohole aus der Reduktion natürlich vorkommender Fettsäuren stammen.

5. Verwendung nach einem der Ansprüche 1 oder 4, **dadurch gekennzeichnet, daß** die im Lösungsmittelgemisch enthaltenen Fettalkohole mindestens eine C=C-Doppelbindung aufweisen.

6. Verwendung nach einem der Ansprüche 1 bis 5, **dadurch gekennzeichnet, daß** das Lösungsmittelgemisch bei 20°C flüssig ist.

7. Verwendung nach einem der vorangehenden Ansprüche 1 bis 6, **dadurch gekennzeichnet, daß** die Druckfarbe eine Offset-, Transfer-, Flach-, Hochund/oder Tiefdruckfarbe ist.

8. Druckfarbe, enthaltend ein Bindemittel, ein Pigment und ein Lösungsmittelgemisch, **dadurch gekennzeichnet, daß** das Lösungsmittelgemisch
a) 80 - 99 Gew. % eines aromatenfreien Mineralöls
sowie
b) 1 bis 20 Gew % eines Esters einer C₈ bis C₂₂ Fettsäure mit insgesamt bis zu 60 C-Atomen
und /oder
c) 1 bis 20 Gew.% eines Fettalkohols mit 6 bis 36 C-Atomen
enthält.

## Claims

1. The use of a solvent mixture for the production of printing inks,
**characterized in that** the solvent mixture contains
a) 80 to 99% by weight of a non-aromatic mineral oil,
b) 1 to 20% by weight of fatty acid esters of C₈₋₂₂ fatty acids containing a total of up to 60 carbon atoms
and/or
c) 1 to 20% by weight of fatty alcohols containing 6 to 36 carbon atoms.

2. The use claimed in claim 1, **characterized in that** the fatty acid components of the fatty acid esters present in the solvent mixture are of natural origin.

3. The use claimed in claim 1 or 2, **characterized in that** the fatty acid esters in the fatty acid component contain at least one C=C double bond.

4. The use claimed in claim 1, **characterized in that** the fatty alcohols emanate from the reduction of naturally occurring fatty acids.

5. The use claimed in claim 1 or 4, **characterized in that** the fatty alcohols present in the solvent mixture contain at least one C=C double bond.

6. The use claimed in any of claims 1 to 5, **characterized in that** the solvent mixture is liquid at 20°C.

7. The use claimed in any of claims 1 to 6, **characterized in that** the printing ink is an offset, transfer, planographic, letterpress and/or gravure printing ink.

8. A printing ink containing a binder, a pigment and a solvent mixture, **characterized in that** the solvent mixture contains
a) 80 to 99% by weight of a non-aromatic mineral oil,
b) 1 to 20% by weight of an ester of a C₈₋₂₂ fatty acid containing a total of up to 60 carbon atoms
and/or
c) 1 to 20% by weight of a fatty alcohol containing 6 to 36 carbon atoms.

## Revendications

1. Utilisation d'un mélange de solvants pour la production d'encre d'imprimerie,
**caractérisée en ce que**
le mélange de solvants contient :
a) de 80 à 99 % en poids d'une huile minérale dépourvue de produits aromatiques,
b) de 1 à 20 % en poids d'un d'ester d'acide gras en C₈ à C₂₂, au total jusqu'à 60 atomes de carbone,
et/ou
c) de 1 à 20 % en poids d'alcools gras ayant de 6 à 36 atomes de carbone.

2. Utilisation selon la revendication 1,
**caractérisée en ce que**
les restes d'acide gras des esters d'acide gras contenus dans le mélange de solvants sont d'origine naturelle.

3. Utilisation selon l'une quelconque des revendications 1 ou 2,
**caractérisée en ce que**
les esters d'acide gras dans le reste d'acide gras possèdent au moins une double liaison C=C.

4. Utilisation selon la revendication 1,
**caractérisée en ce que**
les alcools gras proviennent de la réduction d'acide gras d'origine naturelle.

5. Utilisation selon l'une quelconque des revendications 1 ou 4,
**caractérisée en ce que**
les alcools gras contenus dans le mélange de solvants possèdent au moins une double liaison C=C.

6. Utilisation selon l'une quelconque des revendications 1 à 5,
**caractérisée en ce que**
le mélange de solvants est liquide à 20°C.

7. Utilisation selon l'une quelconque des revendications précédentes 1 à 6,
**caractérisée en ce que**
la couleur d'imprimerie est une encre pour héliogravure ou pour impression en relief pour offset, pour transfert ou pour impression à plat.

8. Encre d'imprimerie contenant un agent liant, un pigment, et un mélange de solvants,
**caractérisée en ce que**
le mélange de solvants contient :
a) de 80 à 99 % en poids d'une huile minérale dépourvue de produits aromatiques,
b) de 1 à 20 % en poids d'un ester d'acide gras en C₈ à C₂₂, ayant au total jusqu'à 60 atomes de carbone,
et/ou
c) de 1 à 20 % en poids d'alcools gras ayant de 6 à 36 atomes de carbone.
